# FASCICULE DE BREVET EUROPEEN

(11) **EP 4 294 653 B1**
(45) Date de publication et mention de la délivrance du brevet: **13.05.2026**
(21) Numéro de dépôt: 22705857.5
(22) Date de dépôt: 20.01.2022
(51) Int. Cl.: B60H 1/34, F24F 13/14

(54) **AÉRATEUR POUR SYSTÈME DE CHAUFFAGE, DE VENTILATION ET DE CLIMATISATION DE VÉHICULE AUTOMOBILE**
LUFTAUSSTRÖMER FÜR EINE HEIZUNGS-, LÜFTUNGS- UND KLIMAANLAGE EINES KRAFTFAHRZEUGS
AIR VENT FOR A HEATING, VENTILATION AND AIR-CONDITIONING SYSTEM OF A MOTOR VEHICLE

(30) Priorité: 22.02.2021 FR 2101667
(43) Date de publication de la demande: 27.12.2023
(73) Titulaire: Stellantis Auto SAS, 78300 Poissy (FR)
(72) Inventeur: BARTHAUD, Christophe, 25490 FESCHES LE CHATEL (FR); CHOUARAIN, Laurent, 91230 MONTGERON (FR)
(74) Mandataire: BCIP
(86) Numéro de dépôt international: PCT/FR2022/050108
(87) Numéro de publication internationale: WO 2022/175613

(56) Documents cités:
- DE-A1- 2 012 000
- FR-A1- 3 081 384
- FR-A1- 3 081 778

## Description

### [Domaine technique]

La présente invention concerne un aérateur pour système de chauffage, de ventilation et de climatisation de véhicule automobile.

### [Technique antérieure]

Un tel aérateur, connu par exemple de la demande de brevet française FR 2 956 065, comporte classiquement :
- un corps creux définissant un conduit apte à canaliser un flux d'air jusqu'à une ouverture de sortie débouchant dans l'habitacle du véhicule ;
- au moins un premier jeu d'ailettes de déflexion montées pivotantes à l'intérieur dudit conduit selon des axes parallèles entre deux positions angulaires extrêmes, ces dernières étant solidaires en rotation les unes des autres par l'intermédiaire d'au moins un organe de liaison ; et
- un organe d'actionnement destiné à assurer le pilotage en rotation du au moins dit premier jeu d'ailettes via un mécanisme de commande.

Un tel aérateur est également pourvu de moyens d'occultation destinés, dans une configuration particulière, à empêcher autant que possible le flux d'air canalisé circulant dans le conduit de s'échapper au travers de l'ouverture de sortie.

Les documents FR3081778, FR3081384 et DE2012000 décrivent des aérateurs comportant une molette commandant le déplacement de volets de manière à en modifier l'orientation.

Selon une première solution bien connue de l'art antérieur, ces moyens d'occultation sont constitués par les ailettes de déflexion d'un jeu qui sont aptes à venir occuper une configuration de fermeture dans laquelle elles se recouvrent partiellement de sorte à obstruer le conduit.

L'utilisation de telles ailettes de type occultantes assurant à la fois les fonctions directivité et occultation présente pour principal inconvénient de modifier de manière conséquente le débit du flux d'air pénétrant dans l'habitacle en fonction de l'orientation de ces ailettes, de sorte que les usagers éprouvent certaines difficultés à trouver le bon compromis dans leur réglage.

Selon une deuxième solution également bien connue de l'art antérieur, les moyens d'occultation sont constitués par un unique volet d'occultation monté pivotant dans le conduit en amont du ou des jeux d'ailettes entre une position d'ouverture maximale et une position de fermeture empêchant le flux d'air canalisé de s'échapper au travers de l'ouverture de sortie.

Le pilotage en rotation de ce volet est alors assuré par une molette accessible depuis la face frontale du corps creux et relié à un second mécanisme de commande.

Cette solution a toutefois pour inconvénient principal de nécessiter deux mécanismes de commande différents pilotés par deux organes d'actionnement différents, ce qui génère un surcoût de fabrication.

### [Exposé de l'invention]

La présente invention vise donc à améliorer la situation.

Elle propose à cet effet un aérateur pour système de chauffage, de ventilation et de climatisation de véhicule automobile, comportant :
- un corps creux définissant un conduit apte à canaliser un flux d'air jusqu'à une ouverture de sortie débouchant dans l'habitacle dudit véhicule,
- au moins un premier jeu d'ailettes de déflexion montées pivotantes selon des axes parallèles à l'intérieur dudit conduit entre deux positions angulaires extrêmes, ces dernières étant en outre solidaires en rotation les unes des autres par l'intermédiaire d'au moins une tige de liaison,
- un volet d'occultation monté pivotant dans ledit conduit en amont dudit premier jeu d'ailettes entre une position d'ouverture maximale et une position de fermeture empêchant le flux d'air canalisé de s'échapper au travers de ladite ouverture de sortie ;
l'aérateur comportant en outre un mécanisme à engrenages piloté par une unique molette d'entraînement, ledit mécanisme étant configuré de sorte que la rotation de ladite molette sur une première partie de sa course angulaire permette de commander la rotation des ailettes dudit premier jeu entre leurs deux positions angulaires extrêmes, et de sorte que la rotation de ladite molette sur la seconde partie restante de sa course angulaire permette de commander la rotation dudit volet entre sa position d'ouverture maximale et sa position de fermeture. Ladite molette comporte une première denture externe en arc de cercle engrainée avec une seconde denture externe en arc de cercle prévue sur une roue montée rotative, ladite roue portant un premier doigt de guidage cheminant dans un premier chemin de came ménagé sur une de l'au moins une tige de liaison, de sorte à entraîner, lors de la rotation de ladite molette sur la première partie de sa course angulaire, le déplacement de cette tige de liaison provoquant le pivotement progressif des ailettes dudit premier jeu entre leurs deux positions angulaires extrêmes.

En permettant de piloter de manière séquentielle et à l'aide d'une unique molette le réglage de la directivité du flux d'air via la rotation d'ailettes classiques de déviation ainsi que l'occultation du conduit via la rotation du volet, l'aérateur selon l'invention permet d'assurer un confort d'utilisation optimal pour l'usager tout en limitant le coût de revient.

Par ailleurs, cet aérateur présente l'avantage, lorsqu'il est pourvu d'un second jeu d'ailettes agencées en aval de celles du premier jeu, d'éviter d'avoir recours à un curseur monté à coulissement sur l'une de ces ailettes du second jeu pour assurer le réglage de l'orientation des deux jeux d'ailettes mais empêchant l'application de tout revêtement décoratif sur ces mêmes ailettes (les frottements répétés entre cet actionneur et l'ailette sur laquelle il est monté entraînant une disparition progressive de ce revêtement et impactant ainsi négativement le niveau de qualité perçue par les usagers).

Selon des caractéristiques préférées dudit aérateur selon l'invention :
- le profil dudit premier chemin de came est agencé de sorte que la rotation de ladite molette sur la seconde partie restante de sa course n'entraîne aucun déplacement de la ladite tige de liaison afin d'éviter la poursuite du pivotement des ailettes dudit premier jeu ;
- ladite roue comprend une troisième denture externe en arc de cercle apte à coopérer, lors de la rotation de ladite molette sur la seconde partie restante de sa course, avec une quatrième denture externe en arc de cercle centrée sur l'axe de pivotement dudit volet et ménagée sur une platine d'entraînement liée rigidement à ce volet, de sorte à entraîner, lors de la rotation de cette molette sur cette seconde partie restante de sa course, le pivotement progressif de ce volet entre sa position d'ouverture maximale et sa position de fermeture ;
- ladite roue porte un second doigt de guidage apte à coopérer, lors de la rotation de ladite molette sur la seconde partie restante de sa course, avec un second chemin de came ménagé sur ladite platine, de sorte à permettre un engrainement parfaitement synchronisé et sans heurt de ladite troisième denture sur ladite quatrième denture ;
- ladite molette porte, sur un secteur angulaire s'étendant à l'opposé de la première denture externe et au moins égal à celui de cette dernière, un revêtement externe présentant une pluralité de crans de préhension ;
- ledit mécanisme est agencé de sorte que la première partie de la course de ladite molette s'étende sur un secteur angulaire plus grand que celui de la seconde partie restante de cette course ;
- la première partie de la course de ladite molette s'étend sur un secteur angulaire au moins deux fois plus grand que celui de la seconde partie restante de cette course ; et/ou
- l'aérateur comporte également un second jeu d'ailettes de déflexion montées pivotantes à l'intérieur dudit conduit, en aval des ailettes dudit premier jeu et selon des axes de rotation perpendiculaires à ceux de ces dernières.

L'invention vise également sous un second aspect un véhicule automobile comportant au moins un tel aérateur.

### [Brève description des dessins]

L'exposé de l'invention sera maintenant poursuivi par la description détaillée d'un exemple de réalisation, donnée ci-après à titre illustratif mais non limitatif, en référence aux dessins annexés, sur lesquels :
[Fig 1] représente une vue en perspective de trois quart face d'un aérateur pour véhicule automobile selon l'invention ;
[Fig 2] est une vue en perspective de dessous et de trois quart dos de l'aérateur pour véhicule automobile de la figure 1 ;
[Fig 3] représente une vue partielle en perspective de l'aérateur de la figure 1 dépourvu de son corps creux de sorte à permettre une meilleure vision du mécanisme de commande à engrenages et de la molette ;
[Fig 4] est une vue simplifiée de dessus de l'aérateur de la figure 1 dans une première configuration où la molette est en début de course avec les ailettes du premier jeu qui occupent leur première position angulaire extrême et le volet qui occupe sa position d'ouverture maximale ;
[Fig 5] est une vue simplifiée de dessus de l'aérateur de la figure 1 dans une deuxième configuration où la molette a parcouru la première partie se sa course avec les ailettes du premier jeu qui occupent leur seconde position angulaire extrême et le volet qui occupe sa position d'ouverture maximale ; et
[Fig 6] est une vue simplifiée de dessus de l'aérateur de la figure 1 dans une troisième configuration où la molette a parcouru la totalité de sa course avec les ailettes du premier jeu qui occupent leur seconde position angulaire extrême et le volet qui occupe sa position de fermeture.

### [Description détaillée]

On définit sur les figures un repère orthogonal XYZ comprenant trois axes perpendiculaires deux à deux, à savoir :
- un axe X, définissant une direction longitudinale, sensiblement parallèle à l'axe longitudinal du véhicule,
- un axe Y, définissant une direction transversale, horizontale, qui avec l'axe X définit un plan XY horizontal, et
- un axe Z, définissant une direction verticale, perpendiculaire au plan XY horizontal.

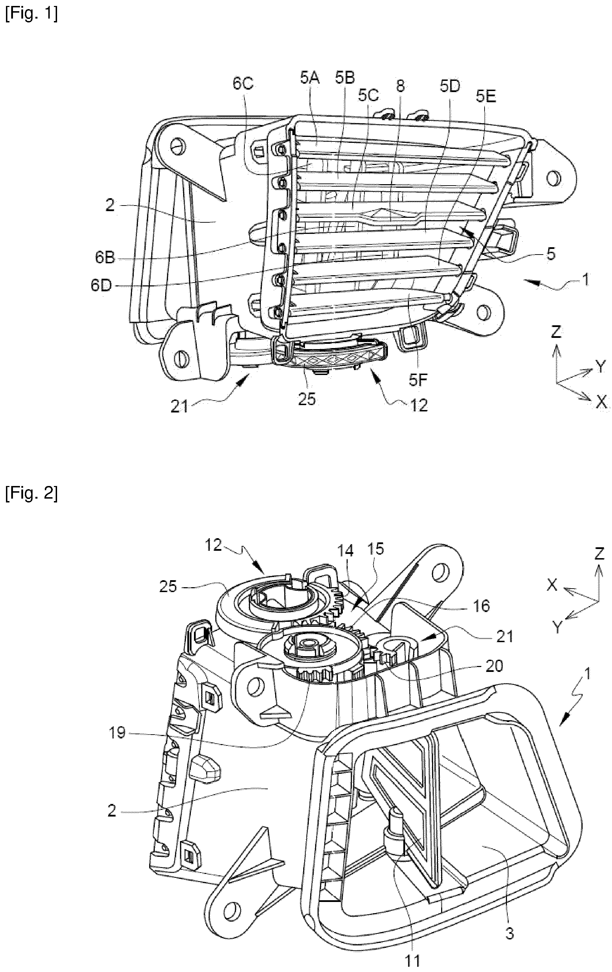

Les figures 1 à 6 représentent un aérateur 1 destiné à être implanté dans la planche de bord (non représentée) d'un véhicule automobile afin de diffuser dans l'habitacle de ce véhicule l'air pulsé provenant d'un système de ventilation et/ou de climatisation.

Cet aérateur 1 comporte un corps 2 définissant un conduit 3 de forme sensiblement rectangulaire et apte à canaliser un flux d'air F jusqu'à une ouverture de sortie 4 débouchant dans l'habitacle du véhicule, ainsi que deux jeux perpendiculaires 5, 6 d'ailettes de déflexion du flux d'air F logées à l'intérieur de ce conduit 3.

Dans la suite de cette description, les termes « amont » et « aval » utilisés pour caractériser la position de certains éléments de l'aérateur 1 sont à considérer par rapport au sens de circulation du flux d'air F dans le conduit 3.

Le jeu 5, situé au voisinage de l'ouverture de sortie 4 du conduit 3, est constitué par six ailettes transversales 5A, 5B, 5C, 5D, 5E, 5F réparties à intervalle régulier les unes au-dessus des autres sur toute la hauteur de ce conduit 3.

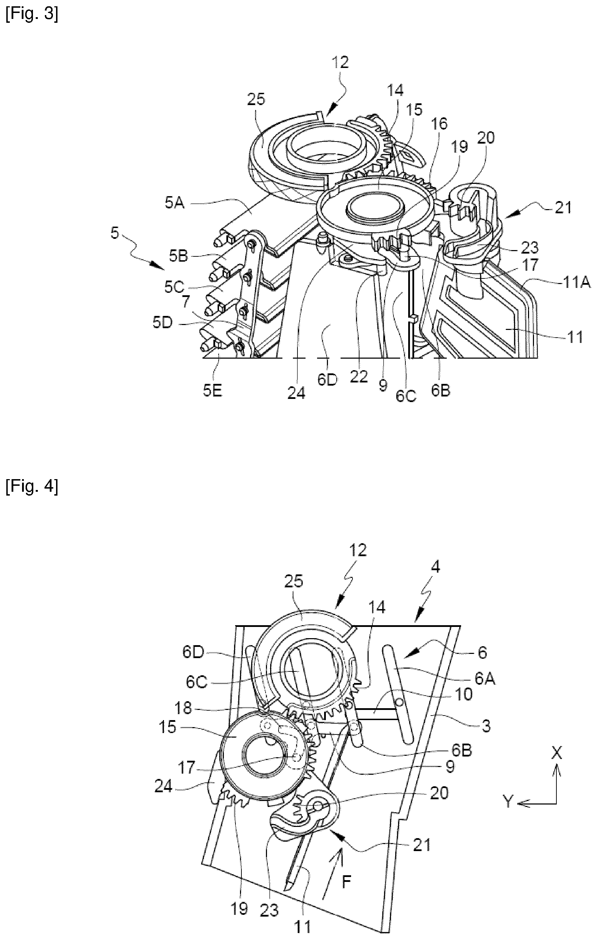

Ces dernières, montées pivotantes selon des axes transversaux parallèles, sont en outre solidaires en rotation par l'intermédiaire d'une tige de liaison 7 les reliant entre elles et visible sur la figure 3.

La commande en rotation de ce jeu 5 d'ailettes transversales 5A, 5B, 5C, 5D, 5E, 5F est assurée par un organe de préhension 8 lié rigidement à l'une de ces ailettes (en l'occurrence à l'ailette 5C située environ à mi-hauteur de cet aérateur 1), de sorte que son déplacement à rotation par un usager vers le haut ou le bas entraîne le pivotement simultané de l'ensemble de ces ailettes transversales et provoque une modification de l'orientation verticale du flux d'air sortant du conduit 3 par l'ouverture de sortie 4.

Cet organe de préhension est constitué en l'espèce par une excroissance 8 venue de moulage d'une seule pièce avec l'ailette 5C et saillant longitudinalement en aval de cette dernière de sorte à faciliter sa manipulation par un usager.

Le jeu 6, situé en amont du jeu 5 et de l'ouverture de sortie 4, est constitué par quatre ailettes verticales 6A, 6B, 6C, 6D réparties à intervalle régulier les unes à côté des autres sur la largeur du conduit 3.

Ces dernières, montées pivotantes selon des axes verticaux parallèles, sont en outre solidaires en rotation par l'intermédiaire de deux tiges de liaison les reliant entre elles, à savoir une première tige de liaison 9 reliant les extrémités inférieures des ailettes 6B, 6C, 6D et une seconde tige de liaison 10 reliant les extrémités supérieures des ailettes 6A, 6B.

On remarquera que la présence de cette seconde tige de liaison 10 est dictée ici par la géométrie particulière du conduit 3 entraînant un raccourcissement de l'ailette 6A dont l'extrémité inférieure est surélevée par rapport à celles des ailettes 6B, 6C, 6D.

En variante et selon la géométrie du conduit et des ailettes verticales 6A, 6B, 6C, 6D, on comprendra qu'une seule tige de liaison pourra être nécessaire pour assurer la solidarisation en rotation de l'ensemble de ces ailettes verticales.

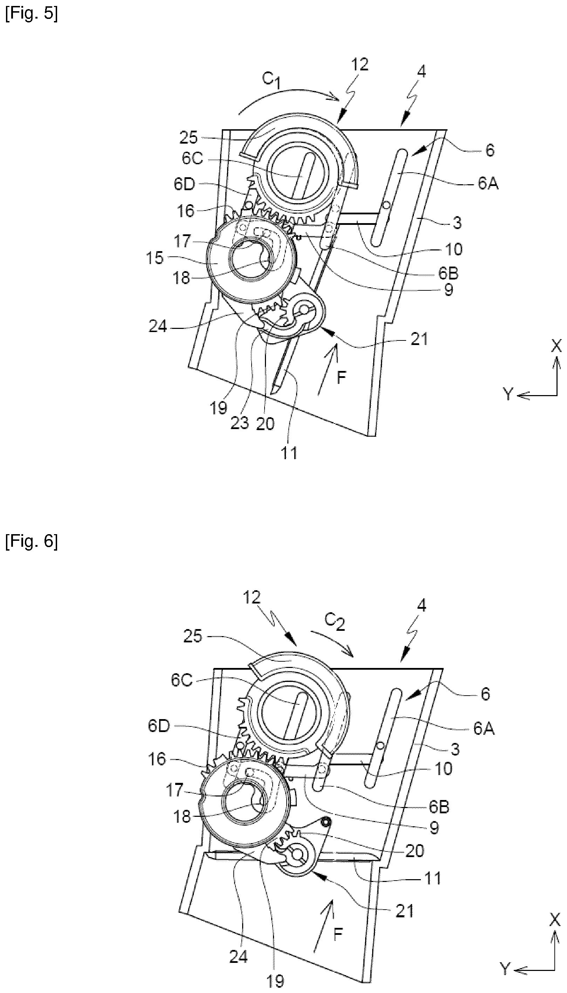

L'aérateur 1 comporte également un volet d'occultation 11 monté pivotant autour d'un axe vertical dans le conduit 3 en amont de ces deux jeux 5, 6 d'ailettes longitudinales et transversales, entre une position d'ouverture maximale (figures 2 à 5) et une position de fermeture (figure 6) empêchant le flux d'air canalisé F de s'échapper au travers de l'ouverture de sortie 4.

Dans sa position d'ouverture maximale illustrée par les figures 2 à 5, ce volet 11 s'étendant suivant un plan vertical sensiblement parallèle aux parois latérales internes du conduit 3 de sorte à perturber le moins possible le flux d'air canalisé F traversant ce conduit.

Dans sa position de fermeture illustrée par la figure 6, chacune de ses deux extrémités latérales vient reposer contre un rebord interne respectif ménagé au niveau d'une paroi latérale correspondante du conduit 3, de sorte à obstruer ce conduit 3 et à empêcher autant que possible le flux d'air canalisé F de s'échapper au travers de l'ouverture de sortie 4.

Le bord périphérique de ce volet 11 est en outre avantageusement surmoulé par une lèvre élastiquement déformable 11A en matériau élastomère permettant d'obtenir un excellent plaquage du volet contre le pourtour interne du conduit 3 et une étanchéité quasi-parfaite au passage de l'air.

Selon l'invention, la commande en rotation du jeu 6 d'ailettes verticales 6A, 6B, 6C, 6D ainsi que celle du volet d'occultation 11 sont assurées par un mécanisme de commande à engrenages piloté par une molette d'entraînement 12 montée rotative autour d'un axe vertical en dessous du conduit 3 et saillant partiellement en aval de l'ouverture de sortie 4.

Cette molette 12, déplaçable en rotation sur une course angulaire prédéfinie comprise par exemple entre 80 et 100°, comporte une première denture externe en arc de cercle 14 s'étendant sur un secteur angulaire correspondant à la course de cette molette12 et étant engrainée avec une seconde denture externe en arc de cercle 16 de même secteur angulaire prévue sur une roue 15 montée également rotative autour d'un axe vertical en dessous du conduit 3.

Cette roue 15 porte un premier doigt de guidage vertical 17 (visible sur la figure 3) cheminant dans un premier chemin de came 18 ménagé sur la tige de liaison 9, de sorte à entraîner, lors de la rotation de la molette 12 sur une première partie C₁ de sa course et tel qu'illustré par la figure 5, le déplacement de cette tige de liaison 9 provoquant le pivotement des ailettes verticales 6A, 6B, 6C, 6D entre leurs deux positions angulaires extrêmes.

La roue 15 comprend en outre une troisième denture externe en arc de cercle 19 s'étendant à l'écart de la denture 16 sur un secteur angulaire prédéfini et apte à coopérer, lors de la rotation de la molette 12 sur la seconde partie restante C₂ de sa course et tel qu'illustré par la figure 6, avec une quatrième denture externe en arc de cercle 20 centrée sur l'axe vertical de pivotement du volet 11 et ménagée sur une platine d'entraînement 21 s'étendant en dessous du conduit 3 en étant liée rigidement à ce volet 11, de sorte à entraîner, lors de la rotation de cette molette 12 sur cette seconde partie restante C₂ de sa course, le pivotement progressif de ce volet 11 entre sa position d'ouverture maximale et sa position de fermeture, cette dernière position étant atteinte en fin de course de la molette 12.

On remarquera que le profil du premier chemin de came 18 est agencé de sorte que la rotation de la molette 12 (et donc celle du doigt de guidage 17) sur la seconde partie restante C₂ de sa course n'entraîne aucun déplacement de la tige de liaison 9, de sorte à éviter la poursuite du pivotement des ailettes verticales 6A, 6B, 6C, 6D du jeu 6.

Le mécanisme à engrenages est agencé de sorte que la première partie C₁ de la course de la molette 12 s'étende sur un secteur angulaire plus grand que celui de la seconde partie restante C₂ de cette course (de préférence au moins deux fois inférieur), de sorte à permettre à la fois un réglage fin de l'orientation des ailettes verticales 6A, 6B, 6C, 6D et une ouverture ou fermeture rapide du volet d'obturation 11.

La roue 15 porte par ailleurs de manière avantageuse un second doigt de guidage vertical 22 (visible sur la figure 3) s'étendant depuis une excroissance périphérique 24 située à proximité de la quatrième denture et apte à coopérer, lors de la rotation de la molette 12 sur la seconde partie restante C₂ de sa course, avec un second chemin de came 23 ménagé sur la platine 21, de sorte à assurer un rattrapage des jeux permettant un engrainement parfaitement synchronisé et sans heurt de la troisième denture 19 sur la quatrième denture 20.

De manière avantageuse, la molette 12 porte, sur un secteur angulaire s'étendant à l'opposé de la première denture externe 14 et au moins égal à celui de cette dernière (compris par exemple entre 150 et 180°), un revêtement externe 25 présentant une pluralité de crans destinés à faciliter sa préhension par un usager.

Selon des variantes de réalisation non représentées, le mécanisme à engrenages commandant la rotation des ailettes du jeu 6 et du volet 11 peut être constitué différemment.

Selon d'autres variantes de réalisation, le nombre d'ailettes d'au moins l'une des deux jeux est différent.

Selon encore d'autres variantes de réalisation, l'aérateur ne comporte qu'un unique jeu 6 d'ailettes commandé par la molette 12 (le jeu 5 étant absent).

Bien entendu, la présente invention est définie par les revendications ci-jointes et ne se limite pas aux formes de réalisation décrites et représentées.

## Revendications

1. Aérateur (1) pour système de chauffage, de ventilation et de climatisation de véhicule automobile, comportant :
- un corps creux (2) définissant un conduit (3) apte à canaliser un flux d'air (F) jusqu'à une ouverture de sortie (4) débouchant dans l'habitacle dudit véhicule,
- au moins un premier jeu (6) d'ailettes de déflexion (6A, 6B, 6C, 6D) montées pivotantes selon des axes parallèles à l'intérieur dudit conduit (3) entre deux positions angulaires extrêmes, ces dernières étant en outre solidaires en rotation les unes des autres par l'intermédiaire d'au moins une tige de liaison (9, 10),
- un volet d'occultation (11) monté pivotant dans ledit conduit (3) en amont dudit premier jeu (6) d'ailettes (6A, 6B, 6C, 6D) entre une position d'ouverture maximale et une position de fermeture empêchant le flux d'air canalisé (F) de s'échapper au travers de ladite ouverture de sortie (4) ;
l'aérateur (1) comportant en outre un mécanisme à engrenages (15, 18, 21) piloté par une unique molette d'entraînement (12), ledit mécanisme (15, 18, 21) étant configuré de sorte que la rotation de ladite molette (12) sur une première partie (C₁) de sa course angulaire permette de commander la rotation des ailettes (6A, 6B, 6C, 6D) dudit premier jeu (6) entre leurs deux positions angulaires extrêmes, et de sorte que la rotation de ladite molette (12) sur la seconde partie restante (C₂) de sa course angulaire permette de commander la rotation dudit volet (11) entre sa position d'ouverture maximale et sa position de fermeture ladite molette (12) comportant une première denture externe en arc de cercle (14) engrainée avec une seconde denture externe en arc de cercle (16) prévue sur une roue (15) montée rotative, **caractérisé en ce que** ladite roue (15) porte un premier doigt de guidage (17) cheminant dans un premier chemin de came (18) ménagé sur une (9) de l'au moins une tige de liaison (9, 10),
de sorte à entraîner, lors de la rotation de ladite molette (12) sur la première partie (C₁) de sa course angulaire, le déplacement de cette tige de liaison (9) provoquant le pivotement progressif des ailettes (6A, 6B, 6C, 6D) dudit premier jeu (6) entre leurs deux positions angulaires extrêmes.

2. Aérateur (1) selon la revendication 1, **caractérisé en ce que** le profil dudit premier chemin de came (18) est agencé de sorte que la rotation de ladite molette (12) sur la seconde partie restante (C₂) de sa course n'entraîne aucun déplacement de la ladite tige de liaison (9) afin d'éviter la poursuite du pivotement des ailettes (6A, 6B, 6C, 6D) dudit premier jeu (6).

3. Aérateur (1) selon l'une des revendications précédentes, **caractérisé en ce que** ladite roue (15) comprend une troisième denture externe en arc de cercle (19) apte à coopérer, lors de la rotation de ladite molette (12) sur la seconde partie restante (C₂) de sa course, avec une quatrième denture externe en arc de cercle (20) centrée sur l'axe de pivotement dudit volet (11) et ménagée sur une platine d'entraînement (21) liée rigidement à ce volet (11), de sorte à entraîner, lors de la rotation de cette molette (12) sur cette seconde partie restante (C₂) de sa course, le pivotement progressif de ce volet (11) entre sa position d'ouverture maximale et sa position de fermeture.

4. Aérateur (1) selon la revendication précédente, **caractérisé en ce que** ladite roue (15) porte un second doigt de guidage (22) apte à coopérer, lors de la rotation de ladite molette (12) sur la seconde partie restante (C₂) de sa course, avec un second chemin de came (23) ménagé sur ladite platine (21), de sorte à permettre un engrainement parfaitement synchronisé et sans heurt de ladite troisième denture (19) sur ladite quatrième denture (20).

5. Aérateur (1) selon l'une des revendications précédentes, **caractérisé en ce que** ladite molette (12) porte, sur un secteur angulaire s'étendant à l'opposé de la première denture externe (14) et au moins égal à celui de cette dernière, un revêtement externe (25) présentant une pluralité de crans de préhension.

6. Aérateur (1) selon l'une des revendications précédentes, **caractérisé en ce que** ledit mécanisme (15, 18, 21) est agencé de sorte que la première partie (C₁) de la course de ladite molette (12) s'étende sur un secteur angulaire plus grand que celui de la seconde partie restante (C₂) de cette course.

7. Aérateur (1) selon la revendication précédente, **caractérisé en ce que** la première partie (C₁) de la course de ladite molette (12) s'étend sur un secteur angulaire au moins deux fois plus grand que celui de la seconde partie restante (C₂) de cette course.

8. Aérateur (1) selon l'une des revendications précédentes, **caractérisé en ce que** qu'il comporte également un second jeu (5) d'ailettes de déflexion (5A, 5B, 5C, 5D, 5E, 5F) montées pivotantes à l'intérieur dudit conduit (3), en aval des ailettes (6A, 6B, 6C, 6D) dudit premier jeu (6) et selon des axes de rotation perpendiculaires à ceux de ces dernières.

9. Véhicule automobile **caractérisé en ce qu'**il comporte au moins un aérateur (1) selon l'une des revendications précédentes.

## Patentansprüche

1. Belüfter (1) für Heizungs-, Lüftungs- und Klimaanlagen von Kraftfahrzeugen, mit:
- einen Hohlkörper (2), der einen Kanal (3) definiert, der einen Luftstrom (F) zu einer Auslassöffnung (4) leiten kann, die in den Fahrzeuginnenraum mündet,
- mindestens einem ersten Satz (6) von Ablenkrippen (6A, 6B, 6C, 6D), die in dem Kanal (3) zwischen zwei Winkelendpositionen in parallelen Achsen schwenkbar gelagert sind, wobei die letzteren außerdem über mindestens eine Verbindungsstange (9, 10) drehfest miteinander verbunden sind,
- eine Abdeckklappe (11), die in der Leitung (3) vor dem ersten Satz (6) von Flügeln (6A, 6B, 6C, 6D) zwischen einer maximalen Öffnungsposition und einer Schließposition schwenkbar angebracht ist, um zu verhindern, dass der kanalisierte Luftstrom (F) durch die Auslassöffnung (4) entweicht;
Der Belüfter (1) umfasst ferner einen Zahnradmechanismus (15, 18, 21), der durch ein einzelnes Antriebsrad (12) angetrieben wird, wobei der Mechanismus (15, 18, 21) so konfiguriert ist, dass die Drehung des Rades (12) über einen ersten Abschnitt (C1) seines Winkelhubs die Drehung der Flügel (6A, 6B, 6C, 6D) des ersten Satzes (6) zwischen ihren beiden äußersten Winkelpositionen steuert und die Drehung des Rades (12) über den verbleibenden zweiten Abschnitt (C2) ermöglicht Aufgrund seines Winkelhubs kann die Drehung der Klappe (11) zwischen ihrer maximalen Öffnungsposition und ihrer Schließposition gesteuert werden, wobei das Rad (12) eine erste äußere Kreisbogenverzahnung (14) aufweist, die mit einer zweiten äußeren Kreisbogenverzahnung (16) in Eingriff steht, die an einem drehbar gelagerten Rad (15) vorgesehen ist, **dadurch gekennzeichnet, dass** das Rad (15) einen ersten Führungsfinger (17) trägt, der sich in eine erste Nockenbahn (18) bewegt, die an einer (9) der mindestens einen Verbindungsstange (9, 10) vorgesehen ist, sodass Antreiben der Bewegung der Verbindungsstange (9) bei der Drehung der Rändelscheibe (12) über den ersten Teil (C1) ihres Winkelweges, wodurch die Schaufeln (6A, 6B, 6C, 6D) des ersten Satzes (6) zwischen ihren beiden Winkelendpositionen allmählich verschwenkt werden.

2. Belüftungsvorrichtung (1) nach Anspruch 1, **dadurch gekennzeichnet, dass** das Profil des ersten Nockenweges (18) so angeordnet ist, dass eine Drehung des Rades (12) um den verbleibenden zweiten Abschnitt (C2) seines Hubes keine Bewegung des Verbindungsstiftes (9) bewirkt, um eine weitere Drehung der Flügel (6A, 6B, 6C, 6D) des ersten Satzes (6) zu verhindern.

3. Lüfter (1) nach einem der vorhergehenden Ansprüche, **dadurch gekennzeichnet, dass** das Rad (15) eine dritte äußere Kreisbogenverzahnung (19) aufweist, die bei der Drehung des Rades (12) auf dem verbleibenden zweiten Abschnitt (C2) seines Hubes mit einer vierten äußeren Kreisbogenverzahnung (20) zusammenwirken kann, die auf der Schwenkachse der Klappe (11) zentriert ist und auf einer Antriebsplatte (21) angebracht ist, die starr mit der Klappe (11) verbunden ist, um bei der Drehung dieser Klappe anzutreiben Rad (12) an diesem zweiten verbleibenden Abschnitt (C2) seines Hubes das allmähliche Verschwenken der Klappe (11) zwischen ihrer maximalen Öffnungs- und Schließstellung.

4. Belüftungsvorrichtung (1) nach dem vorhergehenden Anspruch, **dadurch gekennzeichnet, dass** das Rad (15) einen zweiten Führungsfinger (22) trägt, der bei der Drehung des Rades (12) auf dem verbleibenden zweiten Abschnitt (C2) seines Hubes mit einem zweiten Nockenweg (23) zusammenwirken kann, der auf der Platte (21) vorgesehen ist, um ein perfekt synchronisiertes und reibungsloses Eingreifen der dritten Verzahnung (19) mit der vierten Verzahnung (20) zu ermöglichen.

5. Lüfter (1) nach einem der vorhergehenden Ansprüche, **dadurch gekennzeichnet, dass** das Rädchen (12) auf einem Winkelsektor, der sich von der ersten Außenverzahnung (14) weg erstreckt und mindestens gleich der Letzteren ist, eine Außenverkleidung (25) trägt, die eine Vielzahl von Greifrasten aufweist.

6. Belüftungsvorrichtung (1) nach einem der vorhergehenden Ansprüche, **dadurch gekennzeichnet, dass** der Mechanismus (15, 18, 21) so angeordnet ist, dass sich der erste Abschnitt (C1) des Hubs des Rades (12) über einen Winkelsektor erstreckt, der größer ist als der des verbleibenden zweiten Abschnitts (C2) dieses Hubs.

7. Belüftungsvorrichtung (1) nach dem vorhergehenden Anspruch, **dadurch gekennzeichnet, dass** sich der erste Abschnitt (C1) des Hubs des Rändelrads (12) über einen Winkelsektor erstreckt, der wenigstens doppelt so groß ist wie der des zweiten verbleibenden Abschnitts (C2) dieses Hubs.

8. Belüftungsvorrichtung (1) nach einem der vorhergehenden Ansprüche, **dadurch gekennzeichnet, dass** sie auch einen zweiten Satz (5) von Ablenkrippen (5A, 5B, 5C, 5D, 5E, 5F) umfasst, die im Inneren des Kanals (3), stromabwärts der Rippen (6A, 6B, 6C, 6D) des ersten Satzes (6) und entlang von Drehachsen senkrecht zu jenen dieser drehbar angebracht sind.

9. Kraftfahrzeug, **dadurch gekennzeichnet, dass** es mindestens einen Belüfter (1) nach einem der vorhergehenden Ansprüche umfasst.

## Claims

1. Aerator (1) for a heating, ventilation and air conditioning system system of a motor vehicle, comprising:
hollow body (2) defining a conduit (3) adapted to channel an air flow (F) as far as an exit opening (4) opening into the passenger compartment of said vehicle,
at least one first set (6) of deflexion fins (6 A, 6 B, 6 C, 6 D) mounted to pivot about parallel axes inside said conduit (3) between two end angular positions, the latter also being constrained to rotate with one another by means of at least one connecting rod (9, 10),
an occulting flap (11) pivotally mounted in said conduit (3) upstream said first set (6) of fins (6 A, 6 B, 6 C, 6 D) between a maximum opening position and a closing position preventing the channelled air flow (F) from escaping through said exit opening (4);
the aerator (1) further comprising a gear mechanism (15, 18, 21) controlled by a single drive knob (12), said mechanism (15, 18, 21) being configured such that the rotation of said knob (12) over a first part (C 1) of its angular travel makes it possible to order the rotation of the fins (6 A, 6 B, 6 C, 6 D) of said first clearance (6) between their two end angular positions, and such that the rotation of said knob (12) over the second remaining part (C 2) of its angular travel makes it possible to order the rotation of said flap (11) between its maximum opening position and its closing position, said knob (12) comprising a first outer toothing in the shape of an arc of a circle (14) meshed with a second outer toothing (16) provided on a wheel (15) mounted to rotate, wherein said wheel (15) gates a first guide finger (17) moving in a first cam path (18) provided on one (9) of the at least one connecting rod (9, 10), so as to drive, during the rotation of said knob (12) over the first part (C 1) of its angular travel, the displacement of this connecting rod (9) causing the progressive pivoting of the fins (6 A, 6 B, 6 C, 6 D) of said first clearance (6) between their two end angular positions.

2. An aerator (1) according to claim 1, wherein the profile of said first cam path (18) is arranged such that the rotation of said knob (12) on the second remaining part (C 2) of its travel does not cause any displacement of said connecting rod (9) in order to prevent the continuation of the pivoting of the fins (6 A, 6 B, 6 C, 6 D) of said first set (6).

3. An aerator (1) according to one of the previous claims, wherein said wheel (15) comprises a third outer toothing in the shape of an arc of a circle (19) adapted to cooperate, during the rotation of said knob (12) on the second remaining part (C 2) of its travel, with a fourth outer toothing in the shape of an arc of a circle (20) centred on the pivot axis of said flap (11) and provided on a drive plate (21) rigidly connected to this flap (11), so as to drive, during the rotation of this knob (12) on this second remaining part (C 2) of its travel, the progressive pivoting of this flap (11) between its maximum opening position and its closing position.

4. An aerator (1) according to claim 4, wherein said wheel (15) gates a second guide finger (22) adapted to cooperate, during the rotation of said knob (12) on the second remaining part (C 2) of its travel, with a second cam path (23) arranged on said plate (21), so as to allow perfectly synchronised and smooth meshing of said third toothing (19) on said fourth toothing (20).

5. An aerator (1) according to one of the previous claims, wherein said knob (12) gates, on an angular sector extending opposite the first outer toothing (14) and at least equal to that of the latter, an outer covering (25) having a plurality of gripping notches.

6. An aerator (1) according to one of the previous claims, wherein said mechanism (15, 18, 21) is arranged such that the first part (C1) of the travel of said knob (12) extends over an angular sector greater than that of the second remaining part (C2) of this travel.

7. An aerator (1) according to claim 7, wherein the first part (C1) of the travel of said knob (12) extends over an angular sector at least twice as great as that of the second remaining part (C2) of this travel.

8. An aerator (1) according to one of the previous claims, further comprising a second set (5) of deflexion fins (5A, 5B, 5C, 5D, 5E, 5F) pivotally mounted inside said conduit (3), in downstream with the fins (6A, 6B, 6C, 6D) of said first set (6) and along rotational axes perpendicular to those of the latter.

9. Motor vehicle comprising at least one aerator (1) according to one of the previous claims.
